# EUROPÄISCHE PATENTSCHRIFT

(11) **EP 2 360 006 B1**
(45) Veröffentlichungstag und Bekanntmachung des Hinweises auf die Patenterteilung: **19.11.2014**
(21) Anmeldenummer: 10005597.9
(22) Anmeldetag: 28.05.2010
(51) Int. Cl.: B29C 51/26, B29C 51/04, B29C 51/30

(54) **Vorstrecker mit Schnellwechselkupplung**
Extender with quick swap coupling
Pré-étireuse dotée d'un système d'embrayage à changement rapide

(30) Priorität: 11.02.2010 DE 202010002226 U
(43) Veröffentlichungstag der Anmeldung: 24.08.2011
(60) Teilanmeldung: 14003367.1
(73) Patentinhaber: Optipack GmbH, 86850 Aretsried (DE)
(72) Erfinder: Hupfauer, Markus, 86343 Königsbrunn (DE); Pippig, Detlef, 08523 Plauen (DE); Scupin, Michael, 86343 Königsbrunn (DE); Leutenmair, Herbert, 86424 Dinkelscherben (DE)
(74) Vertreter: Leinweber & Zimmermann

(56) Entgegenhaltungen:
- EP-A1- 0 088 491
- DE-B3-102005 052 913
- DE-U1-202007 003 330
- FR-E- 91 970
- US-A- 3 357 053
- US-A- 4 309 380
- US-A- 4 600 376
- US-A- 5 773 540
- US-B1- 6 688 873

## Beschreibung

Die Erfindung betrifft eine Vorstreckerstempelanordnung nach dem Oberanspruch für ein Thermoformwerkzeug mit einer entlang einer Vorstreckachse verlaufenden Vorstreckerstange und einem Stempelaufsatz mit einem Stempel zum mechanischen Vorformen einer erwärmten Kunststofffolie.

Vorstreckerstempelanordnungen für Thermoformwerkzeuge dieser Art sind aus dem Stand der Technik bekannt, siehe beispielsweise Druckschrift D1: EP 088 491 A1, die den Oberbegriff des Anspruchs 1 offenbart. Thermoformwerkzeuge dienen üblicherweise der Herstellung von Formteilen wie beispielsweise Kunststoffbechern oder Kunststoffflaschen aus einer erwärmten thermoplastischen Kunststofffolie, wobei die warme und dadurch dehnbare Folie, ggf. direkt im Anschluss an ein Extrusionsverfahren oder im Anschluss an die Erwärmung der Folie in einer Aufwärmstation, dem Thermoformwerkzeug zugeführt wird. Das Thermoformwerkzeug besteht üblicherweise aus einem unteren Formwerkzeug mit einer Kavität und einem oberen Formwerkzeug mit einem Vorstrecker. Die Folie wird zwischen oberem und unterem Formwerkzeug fixiert, woraufhin ein Vorstreckerstempelwerkzeug des Vorstreckers durch die Folienebene hindurchfährt und die Folie vordehnt, wodurch die Kontur des aus der Folie herzustellenden Behälters grob vorgeformt wird. Durch den Stempel, der zumindest teilweise in die Kavität hinein und aus der Kavität heraus bewegbar ist, wird die Folie also in die Kavität eingedrückt. Die so vorgeformte Folie kann anschließend unter Drucklufteinwirkung von der einen und/oder Unterdruckeinwirkung von der anderen Seite an eine ggf. wassergekühlte Wandung der Kavität des unteren Formwerkzeuges gebracht werden und nimmt im Verlauf des so bewirkten Kühlvorgangs dauerhaft deren Form an. Nach Erkalten der Folie wird das Formteil üblicherweise ausgestanzt und durch eine Auswerfervorrichtung des unteren Formwerkzeuges aus der Kavität ausgeworfen.

Ein einen Vorstrecker aufweisendes Thermoformwerkzeug muss allerdings nicht notwendigerweise ein unteres Formwerkzeug mit einer Kavität aufweisen. Beispielsweise im Rahmen des sogenannten positiven Thermoformens kann die Folie auch von dem Stempel des Vorstreckers zunächst vorgeformt und anschließend zur endgültigen Formung an den Stempel angesaugt werden.

Insbesondere wenn das herzustellende Formteil im Wesentlichen rotationssymmetrisch ist, ist auch der Stempel des Vorstreckers vorzugsweise im Wesentlichen rotationssymmetrisch mit der zentralen Achse der Vorstreckerstange als Symmetrieachse. Um eine geeignete Vorformung der Folie durch den Stempel zu erhalten, sollte dieser so geformt sein, dass die bei dem Dehnvorgang an dem Stempel anliegende Folie etwa gleichermaßen gedehnt wird, so dass ungleichmäßige Wandstärkeverteilungen des herzustellenden Behälters verhindert werden.

Formteile, die sich nur in der Höhe unterscheiden, können mit demselben Thermoformwerkzeug gefertigt werden, wenn der die Kavität aufweisende Formeinsatz des unteren Formwerkzeuges durch einen anderen, an die Abmessungen des neuen Formteils angepassten Formeinsatz ausgetauscht wird. Hierzu wird üblicherweise auch der Stempel des Vorstreckers durch einen anderen, an die Abmessungen des neuen Formteils, insbesondere an dessen veränderte Tiefe, angepassten Stempel ersetzt, wobei bei einer derartigen Umrüstung des Vorstreckers jeweils einen Stempel aufweisende Stempelaufsätze, die über einen Verbindungsabschnitt mit der Vorstreckerstange verbunden sind, ausgetauscht werden.

Ein Austausch der Stempelaufsätze ist also ggf. notwendig, wenn das Thermoformwerkzeug zur Herstellung eines Formteils mit anderer Höhe, Volumen und/oder Form umgerüstet werden soll. Außerdem kann zu Reinigungszwecken der Stempel oder aufgrund von Abnutzungserscheinungen an den Stempeloberflächen eine Umrüstung der Stempelaufsätze notwendig werden. Stempelaufsätze aus dem Stand der Technik weisen in dem Verbindungsabschnitt ein Innengewinde auf, in das ein ein Außengewinde aufweisender Abschnitt der Vorstreckerstange einschraubbar ist. Hierzu weist der Stempelaufsatz im Verbindungsabschnitt einen Angriffsabschnitt zum Angriff eines Spezialwerkzeugs auf. Im Verlauf eines Umrüstvorgangs muss zunächst der auszutauschende Stempelaufsatz mithilfe des Spezialwerkzeuges von der Vorstreckerstange gelöst und anschließend mit der Hand vollständig abgeschraubt werden. Ggf. vorhandene Verlängerungselemente zur Verlängerung des Stempelaufsatzes müssen dabei von der Vorstreckerstange abgenommen werden. Um die Eindringtiefe des einzuwechselnden Stempels in die Kavität exakt einzustellen, werden wiederum Verlängerungselemente auf das Außengewinde der Vorstreckerstange aufgesteckt und der Stempelaufsatz wird anschließend auf die Vorstreckerstange aufgeschraubt und mithilfe des Spezialwerkzeuges festgezogen.

Meist ist eine große Anzahl von Kavitäten in einer Anlage nebeneinander angeordnet. Bei einem Umrüstvorgang ist regelmäßig der Austausch aller Stempelaufsätze der Anlage erforderlich, weshalb eine Umrüstung aufgrund der zeitaufwendigen Abschraub- und Aufschraubvorgänge mit einem hohen Produktionsausfall verbunden ist.

Ferner hat es sich gezeigt, dass die beschriebene Gewindeverbindung nur ungenügende Reproduzierbarkeit ermöglicht, da der Stempelaufsatz in Abhängigkeit von der Einschraubtiefe der Vorstreckerstange in das Innengewinde des Stempelaufsatzes unterschiedlich gut zentriert wird. Dabei bietet ein geringer Gewindedurchmesser und eine geringe Einschraubtiefe einen nur geringen Zentriereffekt. Zum Erreichen des erwünschten Vorstreckergebnisses ist jedoch die exakte und unveränderte Positionierung des Stempels in der Kavität auch nach Austausch des Stempels wichtig.

Angesichts dieser Probleme im Stand der Technik liegt der Erfindung die Aufgabe zugrunde, eine schnelle und einfache Umrüstung des Vorstreckerstempels eines Thermoformwerkzeuges zu ermöglichen.

Erfindungsgemäß wird diese Aufgabe durch eine Weiterbildung eines bekannten Vorstreckers gelöst, die im wesentlichen dadurch gekennzeichnet ist, dass durch eine parallel zur Vorstreckachse gerichtete Aufsetzbewegung des Stempelaufsatzes eine dem Lösen des Stempelaufsatzes von der Vorstreckerstange in einer der Richtung der Aufsetzbewegung entgegengesetzten Abziehrichtung entgegenwirkende form- und/oder kraftschlüssige Verbindung zwischen Stempelaufsatz und Vorstreckerstange herstellbar ist.

Die Erfindung geht auf die Erkenntnis zurück, dass zusätzliche Maßnahmen zum Befestigen des Stempelaufsatzes an der Vorstreckerstange wie das Ein- oder Aufschrauben des Stempelaufsatzes auf ein Gewinde der Vorstreckerstange ggf. mithilfe eines Werkzeugs nicht nötig sind, wenn der Verbindungsabschnitt des Stempelaufsatzes derart ausgestaltet ist, dass die Verbindung von Vorstreckerstange und Stempelaufsatz durch Einfaches "Aufstecken" oder "Aufsetzen" des Stempelaufsatzes herstellbar ist. Dieses "Aufstecken" des Stempelaufsatzes wird erfindungsgemäß durch eine parallel zur Vorstreckachse gerichtete Aufsetzbewegung vorgenommen, die bereits eine kraft- und/oder formschlüssige Verbindung zur Folge hat. Der Stempelaufsatz kann dann nach Herstellen der Verbindung aufgrund des hergestellten Form- und/oder Kraftschlusses nicht wieder in entgegengesetzter Richtung abgezogen werden. Eine derartige Verbindung kann beispielsweise in ähnlicher Weise wie eine Schnellverschlusskupplung, bzw. Schnapp- oder Einklinkverbindung zur Verbindung von Leitungen oder Schläuchen verwirklicht sein, so dass die Verbindung durch bloßes Aufstecken "einrastet", oder durch einen in Richtung der Vorstreckachse gerichteten Einklemmvorgang hergestellt werden. Der Einbau eines einzuwechselnden Stempelaufsatzes kann dann in Sekundenschnelle und zusätzlich in reproduzierbarer Weise erfolgen. Anders als bei einem Aufschraubvorgang hängt das Verbindungsergebnis nämlich von deutlich weniger Faktoren ab als bei einem Aufschraubvorgang, bei dem Gesamtlänge der Vorstreckerstempelanordnung und die Zentrierung und Positionierung des Stempelaufsatzes an der Vorstreckerstange von der Festziehkraft und von der Angriffsstelle und Angriffsmoment des Spezialwerkzeuges abhängen können.

Ein Abziehen des mit der Vorstreckerstange verbundenen Stempelaufsatzes wird erfindungsgemäß wirksam verhindert, weil die Verbindung eine in der Abziehrichtung wirkende Arretierung des Stempelaufsatzes an der Vorstreckerstange umfasst. Die Arretierung verhindert insbesondere ein Abziehen des Stempelaufsatzes von der Vorstreckerstange in Abziehrichtung. Ferner kann nach Herstellen der Verbindung eine weitere Verschiebung des Stempelaufsatzes in Richtung der Aufsetzbewegung verhindert werden, wenn das vordere Ende der Vorstreckerstange in Verbindungsstellung an einer Berührfläche des Stempelaufsatzes anliegt.

Eine Arretierung ist erfindungsgemäß durch ein in eine Eingriffskerbe eingreifendes Sperrelement verwirklicht. Hierzu weisen Vorstreckerstange oder Stempelaufsatz eine Eingriffskerbe und das andere dieser beiden Elemente ein Sperrelement auf, das durch seine Gestalt und Positionierung auf den Eingriff in die Eingriffskerbe ausgelegt ist. Nach Verbinden von Vorstreckerstange und Stempelaufsatz greift das Sperrelement in die Eingriffskerbe ein, wodurch ein Lösen des mit der Vorstreckerstange verbundenen Stempelaufsatzes in der Abziehrichtung verhindert wird.

Eine Verbindung kann erfindungsgemäß besonders schnell hergestellt werden, weil das Sperrelement derart radial ausweichbar gelagert ist, dass es während der bei der Aufsetzbewegung auf das Sperrelement einwirkenden Krafteinwirkung entgegen einer zumindest mittelbar auf das Sperrelement einwirkenden Krafteinwirkung eines Vorspannelementes radial nach außen ausweicht, bis es in die Eingriffskerbe eingreift, bei Krafteinwirkung in entgegengesetzter Richtung vorzugsweise aufgrund der Anlage an einer Anlagefläche radial unbewegt bleibt und somit nach Eingriff in die Eingriffskerbe diese bei Krafteinwirkung in entgegengesetzter Richtung nicht wieder verlassen kann. Während der Aufsetzbewegung kann das Sperrelement also radial nach außen ausweichen, bis es in die Eingriffskerbe eingreift, wodurch die Verbindung "einrastet". Ein Abziehen des Stempelaufsatzes in entgegengesetzter Richtung ist dann nicht mehr möglich, da bei Krafteinwirkung in entgegengesetzter Richtung, wie sie bei einer Abziehbewegung des Stempelaufsatzes auf das Sperrelement wirkt, ein radiales Ausweichen des Sperrelementes wirksam verhindert ist, da das Sperrelement an einer Anlagefläche anliegt.

Zum Umrüsten des Stempels eines Thermoformwerkzeuges muss ein mit der Vorstreckerstange verbundener, auszutauschender Stempelaufsatz zunächst von der Vorstreckerstange gelöst werden. Zu diesem Zweck weist der Stempelaufsatz erfindungsgemß ein Betätigungselement auf, bei dessen Betätigung ein Abnahmevorgang des mit der Vorstreckerstange verbundenen Stempelaufsatzes von der Vorstreckerstange freigegeben wird. Die Freigabe des Abnahmevorgangs kann besonders schnell und einfach erfolgen, wenn die Betätigung durch Krafteinwirkung auf das Betätigungselement, vorzugsweise mit der Hand, erfolgt.

Erfindungsgemäß weist das Betätigungselement eine zumindest teilweise auf den Sperrelementen zumindest mittelbar aufliegende Auflagefläche zur Übertragung einer Kraft auf Sperrelemente und Vorspannelement bei Betätigung des Betätigungselementes auf, wobei die Sperrelemente infolge der Krafteinwirkung entgegen der Wirkung des Vorspannelementes radial nach außen gedrängt werden. Die Sperrelemente liegen also zumindest mittelbar auf einer Auflagefläche des Betätigungselementes auf und werden bei Betätigung des Betätigungselementes infolge der Krafteinwirkung entgegen der Wirkung des Vorspannelementes aus dem Verriegelungsraum und somit aus der Eingriffskerbe der Vorstreckerstange herausgedrängt, wodurch die Verbindung "entriegelt" wird.

In einer bevorzugten Ausführungsform der Erfindung weist die Vorstreckerstange an ihrem dem Stempelaufsatz zugewandten Ende einen etwa zylinderförmigen Kupplungszapfen auf und der Verbindungsabschnitt weist einen Kupplungsflansch mit einem im Wesentlichen komplementär zu dem Kupplungszapfen ausgebildeten Verriegelungsraum und radial ausweichbar gelagerten, in den Verriegelungsraum zumindest teilweise eingreifenden Sperrelementen auf, welche nach Verbinden des Stempelaufsatzes mit der Vorstreckerstange in mindestens eine in dem Kupplungszapfen gebildete Eingriffskerbe, insbesondere eine den Kupplungszapfen etwa ringförmig umlaufende Eingriffsnut, eingreifen. Wenn die Vorstreckerstange eine den Kupplungszapfen ringförmig umlaufende Eingriffsnut aufweist, rastet die Verbindung bei durch die axiale Lage der Eingriffsnut vorgegebener Eindringtiefe des Kupplungszapfens in den Verriegelungsraum automatisch ein. Die Sperrelemente können dabei beispielsweise Sperrkugeln, Sperrstifte oder Sperrzylinder sein. Vorzugsweise sind die Sperrelemente Sperrstifte, die radial nach innen in Richtung des Verriegelungsraumes gedrängt werden und nach Herstellen der Verbindung in die Eingriffsnut des in dem Verriegelungsraum zumindest teilweise aufgenommenen Kupplungszapfens eingreifen.

Das Sperrelement bzw. die Sperrelemente können dabei durch mindestens ein Vorspannelement, bevorzugt durch eine Feder, besonders bevorzugt eine Schraubenfeder zumindest teilweise radial nach innen in den Verriegelungsraum gedrängt werden. Eine Feder ist fertigungstechnisch besonders einfach herstellbar und gleichzeitig als Vorspannelement besonders wirksam. Die Feder kann dabei radial wirken, sie kann jedoch auch axial in Richtung der Vorstreckerstange wirken, wenn eine Kraftumlenkanordnung vorhanden ist, infolge derer die Sperrelemente bei axial wirkender Federkraft radial nach innen gedrängt werden.

In einer besonders bevorzugten Ausführungsform der Erfindung sind die Sperrelemente mindestens zwei quer, insbesondere etwa senkrecht zu der Vorstreckachse verlaufende Sperrstifte, die durch eine parallel zu der Vorstreckachse wirkende Feder in jeweils eine unter einem Winkel im Bereich von 30° bis 60°, insbesondere etwa 45°, radial nach innen verlaufende und eine innere Anlagefläche aufweisende Führungsnut gedrängt werden. Die Feder ist vorzugsweise an ihrem einen, dem Stempel zugewandten Ende durch einen Ringabsatz des Kupplungsflansches abgestützt und wirkt über ihr anderes Ende ggf. mittelbar über ein Kraftübertragungselement auf die Sperrstifte ein. Das Kraftübertragungselement kann in Form einer ringförmigen, an einem Ende der Feder aufliegenden Druckscheibe gebildet sein. Die Sperrstifte liegen vorzugsweise in jeweils zwei Kontaktbereichen wiederum auf der Druckscheibe auf, so dass sie nach Projektion auf eine senkrecht zur der Vorstreckachse verlaufende Projektionsebene Sekanten der kreisringförmigen Druckscheibe bilden. Durch die unter einem Winkel im Bereich von 30° bis 60° zur Vorstreckachse radial nach innen in Richtung des Verriegelungsraums verlaufenden Führungsnuten zur Aufnahme der etwa senkrecht zur Vorstreckachse verlaufenden Sperrstifte wird eine Kraftumlenkanordnung gebildet, infolge derer die Sperrelemente bei axial einwirkender Kraft des Vorspannelementes radial nach innen in den Verriegelungsraum und gleichzeitig axial in Richtung der Vorstreckerstange gedrängt werden. Ein Winkel von etwa 45° hat sich im Hinblick auf eine problemlose Funktionsweise als besonders vorteilhaft erwiesen. Die Führungsnuten durchsetzen einen Wandabschnitt des Kupplungsflansches, der den Verriegelungsraum zumindest teilweise rohrartig umschließen kann, derart, dass die in die Führungsnuten maximal hineingedrängten und somit in Anlage an die innere Anlagefläche der Führungsnuten gebrachten Sperrelemente nach Verbindung mit der Vorstreckerstange vorzugsweise im Wesentlichen spielfrei in die Eingriffskerbe des Kupplungszapfens eingreifen. Kupplungszapfen und Verriegelungsraum sind komplementär zueinander ausgebildet, so dass die im Wesentlichen spielfreie Aufnahme des Kupplungszapfens in dem Verriegelungsraum möglich ist.

Die Umrüstzeit kann weiter verkürzt und der Umrüstvorgang weiter vereinfacht werden, wenn der Abnahmevorgang in einer in Abziehrichtung gerichteten Abnahmebewegung des Stempelaufsatzes besteht. Das Abnehmen des auszutauschenden Stempelaufsatzes erfolgt also durch Druck auf das Betätigungselement und anschließendes axiales Abziehen entgegen der Richtung der Aufsetzbewegung und somit, ebenso wie das Aufsetzen, in Sekundenschnelle, da kein zeitaufwendiger Abschraubvorgang mit der Hand und die Hinzunahme eines Werkzeugs nötig sind.

In einer bevorzugten Ausführungsform der Erfindung weist das Betätigungselement einen die Vorstreckachse ringförmig umlaufenden Kupplungsring auf. Die Betätigung des Betätigungselements erfolgt durch Krafteinwirkung auf den Kupplungsring vorzugsweise in Abziehrichtung. Der Kupplungsring wird hierzu mit der Hand vorzugsweise in Richtung des Stempels gezogen bzw. gedrückt, wodurch die Arretierung des Stempelaufsatzes an der Vorstreckerstange gelöst wird und der Abnahmevorgang freigegeben wird.

Um eine unbeabsichtigte Betätigung des Betätigungselementes und ein damit ggf. verbundenes Ablösen des Stempelaufsatzes von der Vorstreckerstange bei Betrieb der Anlage zu verhindern, kann der Stempelaufsatz zusätzlich einen Sicherungsmechanismus zum Verhindern einer unerwünschten Betätigung aufweisen. Hierzu kann der Stempelaufsatz vorzugsweise mindestens zwei Betriebszustände einnehmen, wobei der Stempelaufsatz durch Verdrehen des Kupplungsringes um die Vorstreckachse von dem ersten in den zweiten Betriebszustand verstellbar ist, und eine Betätigung des Betätigungselementes in dem zweiten Betriebszustand möglich ist, in dem ersten aber nicht. Ein Verstellen von dem zweiten in den ersten Betriebszustand erfolgt durch Verdrehen des Kupplungsringes um die Vorstreckachse in gegenläufiger Umfangsrichtung. Nach Befestigung eines neuen Stempelaufsatzes an der Vorstreckerstange und vor Inbetriebnahme der Anlage wird der Stempelaufsatz in den ersten Betriebszustand versetzt, wodurch der Stempelaufsatz zusätzlich an der Vorstreckerstange gesichert ist. Vor Abnahme des Stempelaufsatzes von der Vorstreckerstange wird der Stempelaufsatz in den zweiten Betriebszustand versetzt, in dem das Betätigungselement zur Freigabe der Abnahmebewegung betätigbar ist.

Beispielsweise liegt im ersten Betriebszustand eine dem Stempel zugewandte Kontaktfläche des Kupplungsringes an einem Sicherungselement wie etwa einem Sicherungsstift des Verbindungsabschnittes derart an, dass ein Drücken bzw. Ziehen des Kupplungsrings in Abziehrichtung verhindert wird. Die Kontaktfläche des Kupplungsrings weist ferner eine Freigabenut auf, der das Sicherungselement nach Verstellen in den zweiten Betriebszustand gegenüberliegt, so dass bei Krafteinwirkung auf den Kupplungsring im zweiten Betriebszustand ein Heranziehen bzw. Drücken des Kupplungsrings in Richtung des Stempels möglich ist, da das Sicherungselement im zweiten Betriebszustand in die Freigabenut eingreifen kann und nicht an der Kontaktfläche anliegt. Ein Verdrehen des Kupplungsrings um die Vorstreckachse über dessen Drehlage im ersten bzw. zweiten Betriebszustand hinaus wird vorzugsweise durch den Anschlag des Sicherungselementes an einer seitlichen Kontaktflächenwand des Kupplungsrings verhindert. Die Kontaktfläche kann ferner eine sich in Richtung des Stempels erstreckende Wölbung aufweisen, über die das Sicherungselement bei Verstellung des Betriebszustandes reibend hinwegleiten muss, so dass eine gewisse Drehkraft zur Überwindung dieses Gleitwiderstandes bei Verstellung des Betriebszustandes aufgebracht werden muss. Die Wölbung kann beispielsweise in Form eines aus der Kontaktfläche hervorragenden halbkugelförmigen vorderen Endes einer Feststellschraube gebildet sein.

Im Hinblick auf den Schutz von Sperrelementen, Vorspannelementen und/oder Kupplungsflansch vor mechanischen Einwirkungen und vor Verschmutzung durch Folienbestandteile hat es sich als vorteilhaft erwiesen, wenn das Betätigungselement form- und/oder kraftschlüssig mit dem Stempelaufsatz verbindbar ist, wobei Sperrelement/e, Vorspannelement/e und/oder Kupplungsflansch zumindest teilweise von dem Betätigungselement abgedeckt werden. Ein Betätigungselement in Form eines Kupplungsrings kann eine glatte und ebene und damit besonders einfach zu reinigende äußere Begrenzungsfläche aufweisen, die gleichzeitig eine große und einfach mit der Hand zur erreichende Angriffsfläche für die Betätigung bietet. Insbesondere können Sperrelement/e und/oder elastische/s Element/e zumindest teilweise in einem zwischen Kupplungsflansch und Kupplungsring gebildeten Hohlraum aufgenommen sein und damit besonders gut vor mechanischen Einwirkungen geschützt sein.

Die Verschmutzung des Verbindungsbereichs und die Ablagerung von Folienbestandteilen kann wirksam verhindert werden, wenn das Verhältnis zwischen Durchmesser des Kupplungsrings und Durchmesser des Stempels in dessen der Vorstreckerstange zugewandtem Abschnitt 0,5 oder größer, bevorzugt 0,7 oder größer, besonders bevorzugt 0,9 oder größer ist. Besonders bevorzugt ist der Durchmesser von Stempel und Kupplungsring etwa gleich groß, so dass im Übergangsbereich zwischen Stempel und Kupplungsring kein Absatz entsteht, auf/an dem sich Schmutz oder Folienbestandteile ablagern könnten.

Wie oben beschrieben, werden bei Vorstreckerstempelanordnungen aus dem Stand der Technik beim Verbinden von Stempelaufsatz und Vorstreckerstange üblicherweise Verlängerungselemente zur Verlängerung des Stempelaufsatzes auf das Außengewinde der Vorstreckerstange aufgesteckt. Auf diese Weise kann exakt festgelegt werden, wie tief der Stempel in die Kavität des unteren Formwerkzeuges eindringt. Üblicherweise ist bei Vorstreckern ein festes Maß vorgegeben, durch das die Länge des Stempelaufsatzes in Vorstreckrichtung ausgehend von einer vorgegebenen Markierung an der Vorstreckerstange festgelegt ist, wobei die Länge des Stempelaufsatzes durch das Einfügen von Verlängerungselementen zwischen Vorstreckerstange und Stempel eingestellt werden kann. Der Stempelaufsatz besteht dann aus dem Stempel und den Verlängerungselementen, die bei der Abnahme des Stempels vorsichtig entfernt werden müssen, damit sie nicht in die Thermoformanlage fallen. Des Weiteren müssen die Verlängerungselemente nach Abnahme des auszutauschenden Stempelaufsatzes neu sortiert werden. In Abhängigkeit von der Länge des einzuwechselnden Stempels muss eine neue Anzahl von Verlängerungselementen auf die Vorstreckerstange aufgesteckt werden, bis das vorgegebene Maß erreicht wird. Hierfür kann ggf. eine mehrmalige zeitraubende Umsortierung der Verlängerungselemente anfallen, wobei die Gefahr besteht, dass eines der losen Verlängerungselemente in die Anlage fällt.

Dieser zusätzliche Aufwand wird gemäß einem weiteren Gesichtspunkt der Erfindung dadurch beseitigt, dass die Verlängerungselemente einer Vorstreckerstempelanordnung, deren Stempelaufsatz vorzugsweise in dessen Verbindungsabschnitt durch die Verlängerungselemente parallel zu der Vorstreckachse verlängerbar ist, derart an dem Stempelaufsatz befestigbar sind, dass ein mindestens ein, vorzugsweise zwei, drei, vier oder mehr Verlängerungselemente aufweisender Stempelaufsatz einteilig mit der Vorstreckerstange verbindbar ist. Die Verlängerungselemente sind also erfindungsgemäß an dem Stempel befestigbar, so dass der aus Stempel und Verlängerungselementen bestehende Stempelaufsatz ein einteiliges Element bildet. Die Verlängerungselemente können dann beim Ein- oder Ausbau des Stempelaufsatzes nicht in die Anlage fallen. Des Weiteren kann das vorgegebene Maß des einzusetzenden Stempelaufsatzes bereits vor Ausbau des auszuwechselnden Stempelaufsatzes durch Befestigung einer entsprechenden Anzahl von Verlängerungselementen an dem einzusetzenden Stempelaufsatz eingestellt werden. Während nämlich die Länge eines aus einer größeren Anzahl unzusammenhängender Einzelteile, nämlich Stempel und Verbindungselementen, bestehenden Stempelaufsatzes nur schwierig vor dem Zusammenbau mit der Vorstreckerstange messbar ist, ist die Länge eines einteiligen Stempelaufsatzes, der Stempel und daran befestigte Verbindungselemente aufweist, leicht vor dem Verbinden mit der Vorstreckerstange messbar und einstellbar. Die Umrüstzeit kann auf diese Weise weiter verkürzt und der Umrüstvorgang vereinfacht werden.

Es hat sich fertigungstechnisch als besonders vorteilhaft erwiesen, wenn der Stempelaufsatz im Verbindungsbereich einen mit dem Stempel verbindbaren, bevorzugt in ein Innengewinde des Stempels einschraubbaren Kupplungsflansch aufweist, wobei die Verlängerungselemente bei der Verbindung von Kupplungsflansch und Stempel zwischen Kupplungsflansch und Stempel einfügbar, insbesondere einklemmbar sind. Dies bringt den weiteren Vorteil mit sich, dass sich die Verlängerungselemente nicht zwischen Stempelaufsatz und Vorstreckerstange befinden wie bei aus dem Stand der Technik bekannten Vorstreckerstempelanordnungen, wodurch die Verbindung von Vorstreckerstange und Stempelanordnung reproduzierbarer wird. In Anhängigkeit von der Anzahl der Verlängerungselemente ergeben sich nämlich bei aus dem Stand der Technik bekannten Vorstreckerstempelanordnungen unterschiedliche Einschraubtiefen der Vorstreckerstange in den Stempel, wobei die Zentrierung des Stempelaufsatzes von der Einschraubtiefe abhängt.

Das Einfügen der Verbindungselemente zwischen Kupplungsflansch und Stempel kann besonders einfach erfolgen, wenn die Verlängerungselemente ringförmige Ausgleichsscheiben aufweisen, deren kreisförmige zentrale Ausnehmung zum Aufstecken auf einen gewindebolzenförmigen Fortsatz des Kupplungsflansches beim Verbinden von Stempel und Kupplungsflansch ausgelegt ist, wobei vorzugsweise das Verhältnis zwischen Durchmesser der Ausgleichsscheiben und Durchmesser des Stempels in dessen der Vorstreckerstange zugewandtem Abschnitt bevorzugt 0,5 oder größer, bevorzugt 0,7 oder größer, besonders bevorzugt 0,9 oder größer ist. Die Ablagerung von Folienbestandteilen im Verbindungsbereich kann auf diese Weise wirksam verhindert werden. Besonders bevorzugt ist der Durchmesser von Stempel und Ausgleichsscheiben etwa gleich groß, so dass zwischen Stempel und Ausgleichsscheiben kein Absatz entsteht, auf dem sich Schmutz oder Folienbestandteile ablagern könnten. Ferner sind Ausgleichsscheiben in Form von ringförmigen Beilagscheiben besonders einfach und kostengünstig herstellbar.

Besonders bevorzugt sind die Durchmesser von Stempel, Verlängerungselementen und Betätigungselement etwa gleich groß. Der gesamte Stempelaufsatz weist dann keinen Absatz auf, auf dem sich Schmutz oder Folienbestandteile ablagern könnten.

Vorstreckerstempelanordnungen aus dem Stand der Technik umfassen einen Stempel, einen Verbindungsabschnitt und Verlängerungselemente, wobei die Durchmesser von Verbindungsabschnitt und Verlängerungselementen deutlich geringer sind als der Durchmesser des Stempels. Aus diesem Grund lagern sich bei Betrieb des Thermoformwerkzeuges Folienbruchstücke und Becherteile auf zwischen Stempel, Verbindungsabschnitt und Verlängerungselementen gebildeten Absätzen ab, insbesondere wenn die Länge des Stempels besonders kurz im Vergleich zu der Gesamtlänge des Stempelaufsatzes ist. Diese Folienbruchstücke können anschließend in bereits geformte Behälter fallen, wodurch der Behälterinhalt verunreinigt werden kann.

Wie bereits beschrieben, kann die Ablagerung von Folien- und Becherbruchstücken im Verbindungsabschnitt wirksam verhindert werden, wenn das Verhältnis der kleinsten Abmessung eines überwiegenden Anteils des Verbindungsabschnittes in senkrecht zur Vorstreckachse verlaufender Richtung zu der kleinsten Abmessung des Stempels in senkrecht zur Vorstreckrichtung verlaufender Richtung in dessen der Vorstreckerstange zugewandtem Abschnitt 0,5 oder größer, bevorzugt 0,7 oder größer, besonders bevorzugt 0,9 oder größer ist. Der im Wesentlichen gesamte Stempelaufsatz hat vorzugsweise etwa denselben Durchmesser. Dies betrifft jedoch nicht das der Vorstreckerstange abgewandte Ende des Stempels, in dem der Stempel üblicherweise abgerundet ist und sich ggf. verjüngen kann. Lediglich in einem schmalen Spalt zwischen Verlängerungsscheiben und Kupplungsring, der die Breite des Entriegelungshubes zum Freigeben der Abnahmebewegung des Stempelaufsatzes aufweist, kann der Durchmesser des Verbindungsabschnittes deutlich geringer als der Durchmesser der Stempels sein. Dieser Spalt ist jedoch vorzugsweise in parallel zur Vorstreckachse verlaufender Richtung schmaler als 5 mm, insbesondere schmaler als 3 mm, so dass nicht die Gefahr der Ablagerung von Folienbestandteilen in dem Spalt besteht.

Der Stempel muss nicht notwendigerweise rotationssymmetrische Gestalt aufweisen. Vielmehr sind anders geformte, nicht rotationssymmetrische Geometrien ebenso denkbar. So kann beispielsweise der Stempel auch zumindest teilweise eine eckige oder ovale Querschnittsform und/oder an einer Seite eine ebene Fläche aufweisen. Derartige Stempel können zur Herstellung eckiger oder ovaler Behälter verwendet werden. Der Verbindungsabschnitt und/oder die Vorstreckerstange werden dann entsprechend angepasst. Vor allem ist es in diesem Fall wichtig, dass ein Verdrehen des Stempels um die Vorstreckerachse verhindert ist und die Drehlage des Stempelaufsatzes an der Vorstreckerstange fixiert ist, damit der Stempel in die komplementär dazu geformte Kavität des unteren Formwerkzeuges formrichtig vorstrecken kann. Hierzu kann Vorstreckerstange oder Stempelaufsatz eine Führungskerbe, und das Element von Vorstreckerstange und Stempelaufsatz, das die Führungskerbe nicht aufweist, ein Eingriffselement zum Eingriff in die Führungskerbe aufweisen, wobei durch Eingriff des Eingriffselementes in die Führungskerbe die radiale Position des Stempelaufsatzes bzgl. der Vorstreckerachse festgelegt ist und ein Verdrehen des Stempelaufsatzes um die Vorstreckachse nach Herstellen der Verbindung verhindert wird.

Dadurch ist eine Herstellung der Verbindung von Stempelaufsatz und Vorstreckerstange nur unter dem vorgesehenen Verdrehungswinkel möglich. Beispielsweise kann die Führungskerbe eine in dem Kupplungszapfen oder in der Bewandung des Verriegelungsraumes gebildete, axial verlaufende Führungsfuge bzw. Führungsnut sein. Auch andere Anordnungen zur Sicherstellung, dass der Einbau des Stempelaufsatzes nur gerichtet erfolgen kann, sind denkbar. Anders als bei einer Gewindeverbindung zwischen Vorstreckerstange und Stempelaufsatz ist die Einrichtung einer solchen Anordnung bei erfindungsgemäßen Vorstreckerstempelanordnungen besonders einfach. Im Falle eines im Wesentlichen rotationssymmetrischen Stempels, wie er anhand der Zeichnungen im Folgenden beschrieben wird, kann ggf. eine derartige Führungskerbe bzw. ein derartiges Eingriffselement überflüssig sein und den Verbindungsvorgang von Vorstreckerstange und Stempelaufsatz nur unnötig verkomplizieren.

Die Erfindung betrifft ferner ein Thermoformwerkzeug zum Herstellen behälterförmiger Formteile aus einer erwärmten Kunststofffolie mit einem unteren Formwerkzeug mit einer Kavität und mit einem oberen Formwerkzeug mit einer erfindungsgemäßen Vorstreckerstempelanordnung zum Eindrücken der Folie in die Kavität, wobei der Stempel der Vorstreckererstempelanordnung zumindest teilweise in die Kavität hinein und aus der Kavität heraus bewegbar ist.

Mit einer erfindungsgemäßen Vorrichtung kann der Stempelaufsatz eines Vorstreckers eines Thermoformwerkzeuges besonders schnell ausgetauscht werden mit einem Verfahren, das die Verfahrensschritte des Lösens des auszuwechselnden Stempelaufsatzes von der Vorstreckerstange durch Freigabe des Abnahmevorgangs durch Betätigung des Betätigungselementes und durch die in Abziehrichtung gerichtete Abnahmebewegung des Stempelaufsatzes, und des anschließenden Aufsetzens des einzuwechselnden Stempelaufsatzes auf die Vorstreckerstange durch eine parallel zur Vorstreckachse entgegengesetzt zur Abnahmebewegung gerichtete Aufsetzbewegung. Die Abnahmebewegung besteht dabei in einem Abziehen des Stempelaufsatzes von der Vorstreckerstange. Die Aufsetzbewegung besteht in einem Aufsetzen des Stempelaufsatzes auf die Vorstreckerstange, so dass vorzugsweise der Stempelaufsatz in axialer Richtung an der Vorstreckerstange arretiert wird, was insbesondere durch eine Verbindung von Stempelaufsatz und Vorstreckerstange nach Art einer oben beschriebenen Schnellverschlusskupplung geschehen kann.

In der folgenden Beschreibung wird die Erfindung unter Bezugnahme auf die Zeichnung beispielhaft erläutert. In der Zeichnung zeigt:
Fig. 1 eine Vorstreckerstempelanordnung aus dem Stand der Technik in einem durch die zentrale Achse der Vorstreckerstempelanordnung verlaufenden Längsschnitt,
Fig. 2 eine erfindungsgemäße Vorstreckerstempelanordnung in einem durch die zentrale Achse der Vorstreckerstempelanordnung verlaufenden Längsschnitt,
Fig. 3 eine vergrößerte Ansicht des Verbindungsabschnittes der in Fig 2 gezeigten erfindungsgemäßen Vorstreckerstempelanordnung,
Fig. 4 eine vergrößerte Ansicht des Verbindungsabschnittes der erfindungsgemäßen Vorstreckerstempelanordnung aus Fig. 2 in einem Längsschnitt, wobei die Schnittebene senkrecht auf der Schnittebene der Figuren 2 und 3 steht und nicht durch die zentrale Achse der Anordnung verläuft,
Fig. 5 eine perspektivische Ansicht der erfindungsgemäßen Vorstreckerstempelanordnung der Figuren 2 bis 4,
Fig. 6a ein in Form eines Kupplungsringes gebildetes Betätigungselement zur Freigabe der Abnahmebewegung einer zweiten erfindungsgemäßen Ausführungsform der Vorstreckerstempelanordnung,
Fig. 6b einen Kupplungsflansch der zweiten erfindungsgemäßen Ausführungsform der Vorstreckerstempelanordnung, mit dem der in Fig. 6a dargestellte Kupplungsring verbunden werden kann,
Fig. 7 eine perspektivische Ansicht der zweiten erfindungsgemäßen Vorstreckerstempelanordnung aus Fig. 6,

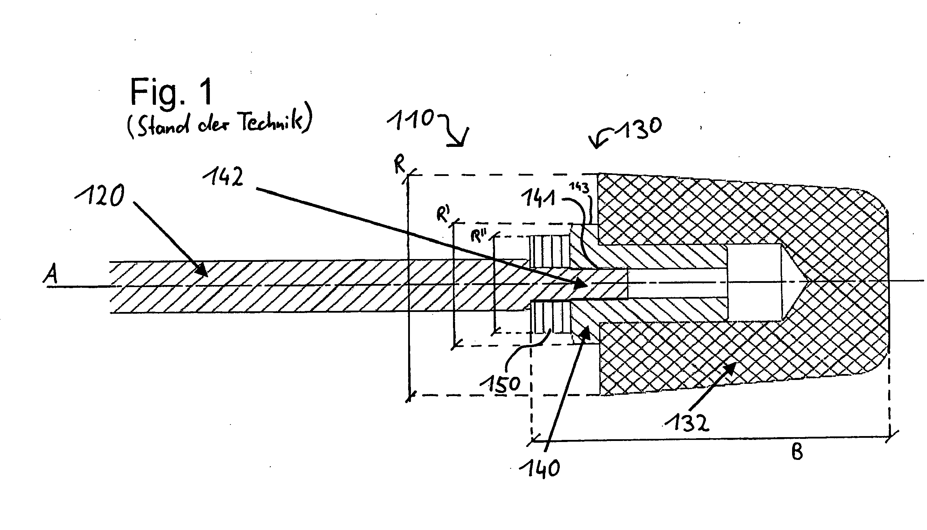

Fig. 1 zeigt eine Vorstreckerstempelanordnung 110 aus dem Stand der Technik in einem durch die zentrale Achse A der Vorstreckerstempelanordnung verlaufenden Längsschnitt. Die Vorstreckerstempelanordnung 110 ist im Wesentlichen rotationssymmetrisch und weist eine Vorstreckerstange 120 und einen mit dem vorderen Ende der Vorstreckerstange 120 verbundenen Stempelaufsatz 130 auf. An ihrem anderen Ende (nicht gezeigt) kann die Vorstreckerstempelanordnung mit dem oberen Formwerkzeug eines Thermoformwerkzeuges derart verbunden sein, dass der Stempel 132 der Vorstreckerstempelanordnung 110 in die Kavität eines unteren Formwerkzeuges zumindest teilweise hinein und aus der Kavität heraus beweglich ist. Durch den Stempel 132 des Stempelaufsatzes 130 wird eine vorgewärmte Kunststofffolie mechanisch gedehnt und so vorgeformt. Der Stempelaufsatz besteht aus dem Stempel 132, einem Verbindungsabschnitt 140 und einer größeren Anzahl von Verlängerungselementen 150. Zur Verbindung von Stempelaufsatz 130 und Vorstreckerstange 120 wird der Stempelaufsatz 130 auf einen ein Außengewinde aufweisenden Gewindeabschnitt 142 der Vorstreckerstange 120 aufgeschraubt. Hierzu weist der Stempelaufsatz in seinem Verbindungsabschnitt 140 eine zentrale Gewindebohrung 141 auf. Die Länge B des Stempelaufsatzes von dem der Vorstreckerstange abgewandten Ende des Stempels 132 bis zu dem dem Stempelaufsatz abgewandten Ende des Gewindeabschnittes 142 ist durch die Abmessungen der Anlage fest vorgegeben und wird durch Aufstecken einer passenden Anzahl von Verlängerungselementen 150 geeigneter Stärke eingestellt. Das Einstellen der vorgegebenen Länge B geschieht dabei erst im Verlauf des Umrüstvorgangs, da die Einstellung der Länge des aus vielen losen Einzelteilen bestehenden Stempelaufsatzes vor Aufstecken auf den Gewindeabschnitt 141 nur schwer möglich ist. Bei jedem Umrüstvorgang müssen die Verlängerungselemente 150 neu sortiert und zusammengestellt werden, damit das Maß B, dass üblicherweise 98 mm beträgt, erreicht wird.

Im Bereich des Verbindungsabschnittes 140 weist der Stempelaufsatz 130 einen besonders geformten Angriffsabschnitt 143 zum Angriff eines Spezialwerkzeuges auf, mithilfe dessen der Stempelaufsatz festgezogen und gelöst werden kann. Nach Lösen mithilfe des Spezialwerkzeuges wird der Stempelaufsatz mit der Hand vollständig abgeschraubt, was aufgrund der Länge des Gewindeabschnittes 142 sehr zeitintensiv ist.

Die Durchmesser von Stempel 132 (R), von Angriffsabschnitt 143 (R') und von Verlängerungselementen 150 (R") sind unterschiedlich groß, so dass sich bei Betrieb des Thermoformwerkzeuges Folienbestandteile und Kunststoffreste auf den zwischen Verlängerungselementen, Angriffsabschnitt und Stempel gebildeten Absätzen ablagern und in die herzustellenden Behälter hineinfallen können. Üblicherweise verläuft die Vorstreckerstange eines Vortreckers in Betrieb der Anlage nämlich etwa in Schwererichtung mit dem Stempelaufsatz an deren unteren Ende, so dass eine Ablagerung von Kunststoffresten auf den beschriebenen Absätzen möglich ist.

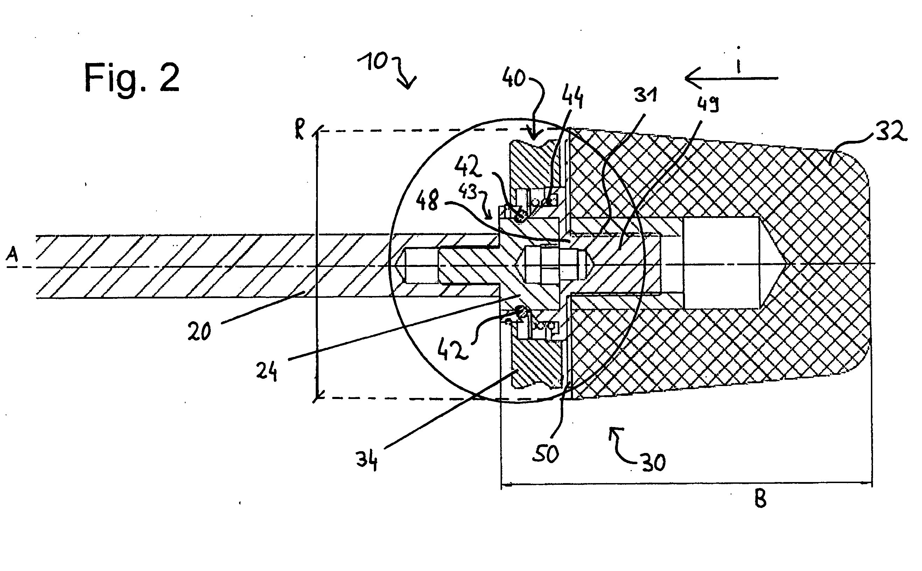

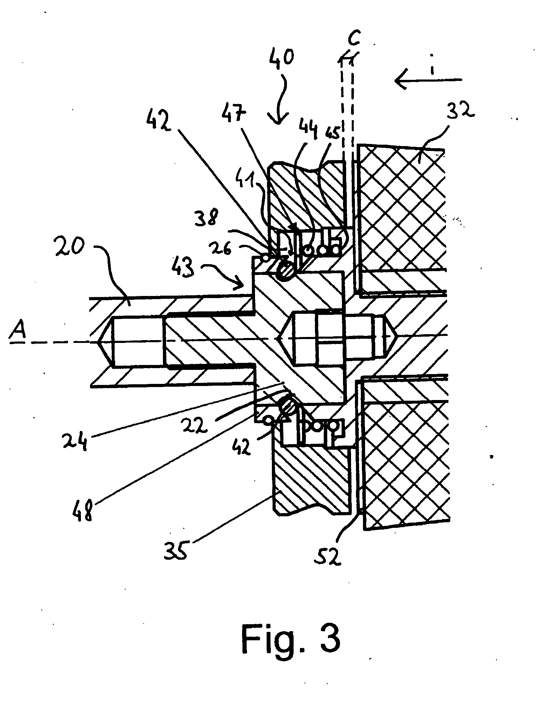

In den Figuren 2 und 3 ist jeweils eine erfindungsgemäße Vorstreckerstempelanordnung 10 in einem durch die zentrale Achse A der Vorstreckerstempelanordnung verlaufenden Längsschnitt dargestellt. Figur 3 zeigt dabei den Verbindungsabschnitt 40 der Vorstreckerstempelanordnung 10 vergrößert (siehe etwa kreisförmige Markierung in Fig. 2). Auch der Stempel 32 der erfindungsgemäßen Vorstreckerstempelanordnung 10 ist im Wesentlichen rotationssymmetrisch. Die Vorstreckerstempelanordnung 10 weist eine Vorstreckerstange 20 und einen mit einem Ende der Vorstreckerstange 20 verbundenen Stempelaufsatz 30 auf. An ihrem anderen Ende (nicht gezeigt) kann die Vorstreckerstempelanordnung mit dem oberen Formwerkzeug eines Thermoformwerkzeuges derart verbunden sein, dass der Stempel 32 der Vorstreckerstempelanordnung 10 in die Kavität eines unteren Formwerkzeuges zumindest teilweise hinein und aus der Kavität heraus beweglich ist. Durch den Stempel 32 des Stempelaufsatzes 30 wird eine vorgewärmte Kunststofffolie mechanisch gedehnt und somit vorgeformt. Der Stempelaufsatz besteht aus dem Stempel 32, einem Verbindungsabschnitt 40 und einem an dem Stempelaufsatz 30 befestigten Verlängerungselement 50 in Form einer Ausgleichsscheibe 52.

Die Vorstreckerstange 20 weist an ihrem vorderen Ende einen in eine Gewindebohrung der Vorstreckerstange 20 eingeschraubten Kupplungszapfen 24 auf. Der Kupplungszapfen 24 ist in einem komplementär zu dem Kupplungszapfen 24 geformten Verriegelungsraum 43 eines an dem Stempel 32 befestigten Kupplungsflansches 48 aufgenommen. Der Kupplungsflansch 48 ist mit einem gewindebolzenförmigen Fortsatz 49 in eine Gewindebohrung 31 des Stempels 32 eingeschraubt. Da der Stempel 32 üblicherweise aus Spezialkunststoff besteht, kann die Gewindebohrung 31 in einem in einer Bohrung des Stempels 32 aufgenommenen, ggf. metallischen Einsatz gefertigt sein. Die Ausgleichsscheibe (50, 52) wird bei dem Einschrauben des Kupplungsflansches 48 in die Gewindebohrung 31 des Stempel 32 auf den Fortsatz 49 des Kupplungsflansches aufgesteckt und zwischen Stempel 32 und Kupplungsflansch 48 eingeklemmt. Auf diese Weise kann die oben beschriebene Länge B des Stempelaufsatzes bereits vor dem Umrüstvorgang einfach abgemessen und durch Einklemmen einer entsprechenden Anzahl von Ausgleichsscheiben 52 eingestellt werden und anschließend der Stempelaufsatz 30 einteilig mit der Vorstreckerstange 20 verbunden werden. Insbesondere besteht nicht die Gefahr, dass Ausgleichsscheiben 50 in die Thermoformanlage hineinfallen. Ferner haben die Ausgleichsscheiben 50 etwa denselben Durchmesser R wie der Stempel, so dass praktisch kein Absatz zwischen Ausgleichsscheiben und Stempel entsteht, auf dem sich Folienabfälle ablagern könnten.

Der Kupplungszapfen 24 der Vorstreckerstange 20 weist eine Eingriffskerbe in Form einer den Kupplungszapfen 24 ringförmig umlaufenden Eingriffsnut 22 auf. Nach Verbindung mit dem Stempelaufsatz 30 greifen zwei Sperrelemente in Form von Sperrstiften 42 in die Eingriffsnut 24 ein, wodurch ein Abziehen der Vorstreckerstange 20 entgegen der Richtung der Aufsetzbewegung (i) verhindert wird. Die Sperrstifte 42 liegen nämlich an einer Auflagefläche 46 des Kupplungsflansches 48 auf, so dass sie bei Krafteinwirkung auf die Sperrstifte in Richtung i radial nicht ausweichen können.

Die Sperrstifte 42 werden durch eine den Verriegelungsraum 43 ringartig umlaufende Schraubenfeder 44 radial nach innen in den Verriegelungsraum 43 gedrängt. Die Feder 44 liegt an ihrer einen Seite auf einem Ringabsatz 45 des Kupplungsflansches 48 auf und wirkt über ihre andere Seite mittelbar über ein Kraftübertragungselement in Form einer Druckscheibe 47 auf die Sperrstifte ein. Die Sperrstifte 42 sind in einer radial schräg nach innen verlaufenden Führungsnut 41 aufgenommen, wodurch die axial wirkende Federkraft die Sperrstifte sowohl radial nach innen in den Verriegelungsraum 43 als axial gegen die Anlagefläche 46 des Kupplungsflansches 48 drängt. Bei einer entgegen der Richtung i wirkenden Kraft auf die Sperrstifte durch den Kupplungszapfen bei der Aufsetzbewegung weichen die Sperrelemente 42 radial entgegen der Wirkung der Feder 44 nach außen aus, bis sie bei entsprechender Eindringtiefe des Kupplungszapfens in den Verriegelungsraum radial nach innen in die Eingriffsnut 22 gedrängt werden, wodurch der Stempelaufsatz axial arretiert wird. Die dem Stempel zugewandte Begrenzungsfläche des Kupplungszapfens 24 liegt dann auf einer Berührfläche des Kupplungsflansches auf, so dass der Stempelaufsatz 30 nicht weiter in Richtung der Vorstreckerstange 20 bewegbar ist. Kupplungsflansch 48, Sperrstifte 42 und Feder 44 sind durch ein Betätigungselement 34 in Form eines ringförmigen Kupplungsringes 35 zumindest teilweise abgedeckt. Sperrstifte 42 und Feder 44 sind in einem zwischen dem Kupplungsflansch 48 und dem Kupplungsring 35 gebildeten Hohlraum 38 aufgenommen und somit vor mechanischer Einwirkung und vor Verschmutzung geschützt. Der Kupplungsring weist eine dem Stempel 32 zugewandte Auflagefläche 36 auf, die zumindest teilweise und zumindest mittelbar auf den Sperrstiften aufliegt. Durch Kraufeinwirkung auf den Kupplungsflansch entgegen der Richtung i werden der Kupplungsflansch 35 und die Sperrstifte 42 entgegen der Wirkung der Feder 44 in Richtung des Stempels 32 bewegt, während die Sperrstifte 42 gleichzeitig radial nach außen aus dem Verriegelungsraum heraus bewegt werden und der Abnahmevorgang freigegeben wird. Der Kupplungsring 35 ist um die Vorstreckachse A drehbar mit dem Kupplungsflansch 48 verbunden, wobei ein in einer ringförmigen Nut des Kupplungsflansches 48 aufgenommener Klemmring 26 die Abnahme des Kupplungsringes in axialer Richtung verhindert.

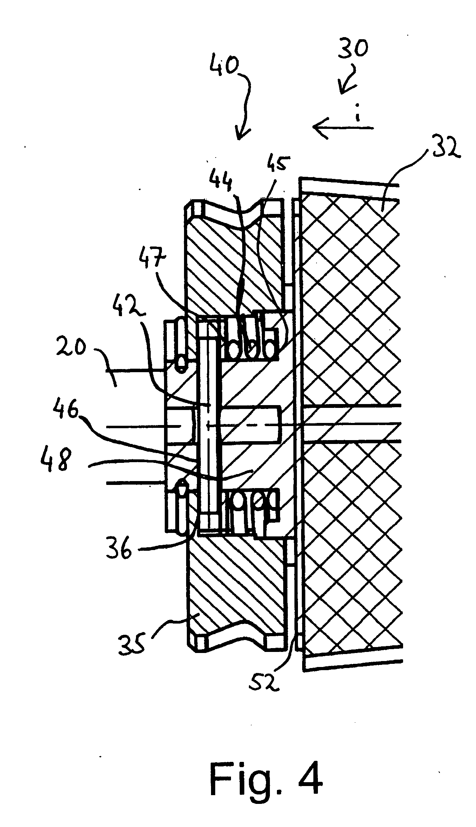

In Figur 4 ist eine vergrößerte Ansicht des Verbindungsabschnittes der erfindungsgemäßen Vorstreckerstempelanordnung aus Fig. 2 in einem weiteren Längsschnitt dargestellt, wobei die Schnittebene senkrecht auf der Schnittebene der Figuren 2 und 3 steht und nicht durch die zentrale Achse verläuft. Vielmehr verläuft die Schnittebene durch einen der beiden Sperrstifte 42 in dessen Längsrichtung. In dieser Schnittebene liegt der Sperrstift an jedem seiner beiden Enden auf der Druckscheibe 47 auf. Ferner liegt die Auflagefläche 36 des Kupplungsringes 35 in dieser Schnittebene zumindest teilweise an den beiden Ende des Sperrstiftes 42 auf. Durch Druck auf die Kupplungsscheibe 35 entgegen der Richtung i wird der Sperrstift 42 entgegen der Wirkung der Feder 44 in Richtung des Stempels und gleichzeitig radial nach außen bewegt, bis er den Verriegelungsraum 43 und somit die Eingriffsnut 22 verlässt, wodurch die Abnahmebewegung freigegeben wird. Eine Bewegung des Kupplungsringes 35 entgegen der Richtung i zur Freigabe der Abnahmebewegung ist über eine dem Entriegelungshub C entsprechende Strecke möglich.

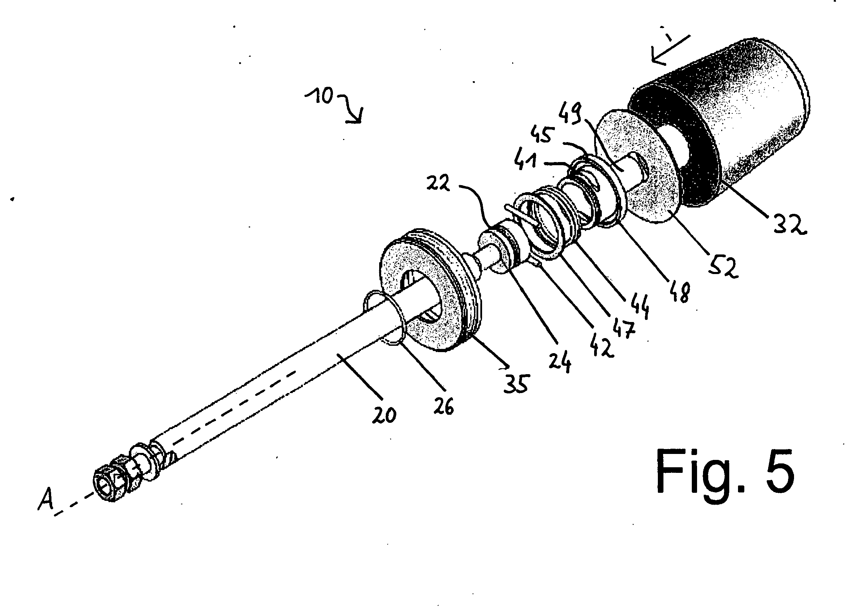

Fig. 5 zeigt eine perspektivische Ansicht der erfindungsgemäßen Vorstreckerstempelanordnung 10 der Figuren 2 bis 4, wobei durch die Einzeldarstellung der beteiligten Elemente der Vorstreckerstempelanordnung 10 der Zusammenbau und Zusammenhalt der Elemente besser nachvollziehbar wird. Die Vorstreckerstange 20 weist an ihrem vorderen Ende einen Kupplungszapfen 24 mit ringförmiger Eingriffsnut 22 auf. Alle übrigen gezeigten Elemente sind dem Stempelaufsatz 30 zuzuordnen. Der Kupplungsflansch 48 kann zusammen mit den damit verbundenen Elementen 26, 35, 42, 47, 44 einteilig von dem Stempel 32 abgeschraubt werden und ggf. nach Entfernen oder Hinzunahme von Ausgleichsscheiben 52 durch Aufstecken auf den gewindebolzenförmigen Fortsatz 49 des Kupplungsflansches 48 wieder in den Stempel 32 eingeschraubt werden. Der Klemmring 26 verhindert die Abnahme des Kupplungsringes 35 in Richtung der Aufsetzbewegung (i).

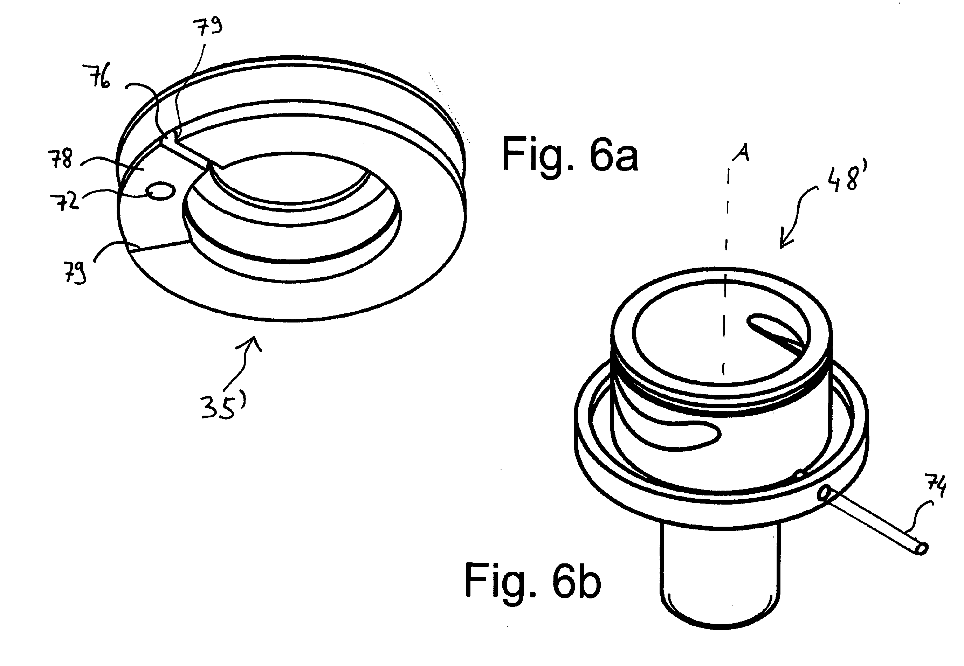

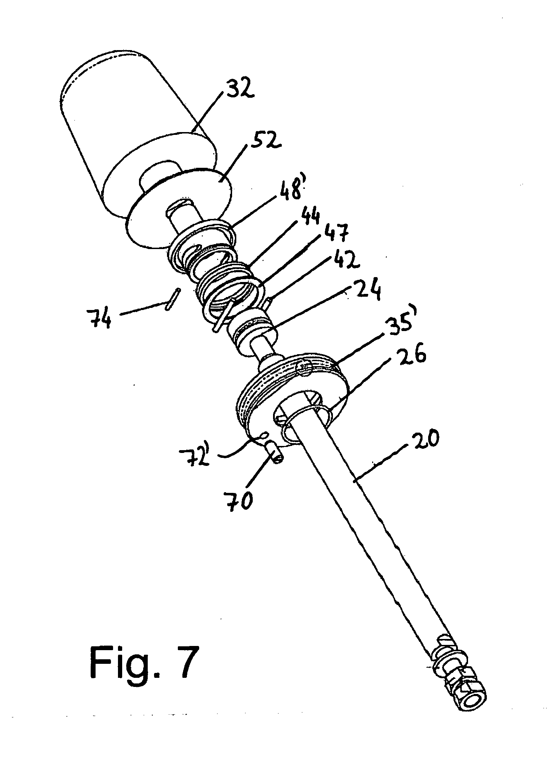

In den Figuren 6 und 7 ist eine zweite Ausführungsform einer erfindungsgemäßen Vorstreckerstempelanordnung gezeigt. Diese Ausführungsform stimmt großenteils mit der oben beschriebenen ersten Ausführungsform überein und gleiche Bezugszeichen weisen auf übereinstimmende Bauteile hin. Der Stempelaufsatz der zweiten Ausführungsform weist jedoch zwei Betriebszustände auf und kann durch Verdrehen des Kupplungsrings 35' um die Vorstreckachse (A) von einem ersten in einen zweiten Betriebszustand verstellt werden und umgekehrt, wobei eine Betätigung des Kupplungsringes zur Freigabe einer Abnahmebewegung des Stempelaufsatzes in dem ersten Betriebszustand möglich ist, in dem zweiten nicht. Durch diesen Sicherungsmechanismus kann eine unbeabsichtigte Betätigung des Kupplungsringes 35' während Betrieb der Anlage verhindert werden.

Zu diesem Zweck weist der Kupplungsring 35' eine dem Stempel 32 bzw. dem in den Stempel 32 eingeschraubten Kupplungsflansch 48' zugewandte Kontaktfläche 78 auf, die in gleitendem Kontakt mit einem Sicherungselement 74 des Kupplungsflansches 48' steht. Auf diese Weise kann ein Heranziehen bzw. Herandrücken des Kupplungsringes 35' in Richtung des Stempels zur Freigabe der Abnahmebewegung verhindert werden. Die Kontaktfläche 78 ist derart kreisringsegmentförmig in die dem Stempel zugewandte Begrenzungsfläche des Kupplungsringes 35' eingefräst, dass eine Verdrehung des Kupplungsringes um die Vorstreckachse (A) nur über den Winkel möglich ist, über den die kreisringsegmentförmige Kontaktfläche 78 gebildet ist. Ein weiteres Verdrehen des Kupplungsringes 35' ist aufgrund der Anlage des Sicherungselementes 74 an seitlichen Kontaktflächenwänden 79 nicht möglich. In die Kontaktfläche 78 ist eine sich an eine Kontaktflächenwand 79 anschließende Freigabenut 76 eingefräst. Wenn das Sicherungselement der Freigabenut 76 gegenüberliegt, ist ein Heranziehen des Kupplungsringes 35' in Richtung des Stempels 32 unter gleichzeitigem Eingriff des Sicherungselementes 74 in die Freigabenut 76 möglich. Hierdurch wird die Abnahmebewegung des Stempelaufsatzes freigegeben. Durch Verdrehen des Kupplungsringes 35' um die Vorstreckachse (A) wird der Stempelaufsatz vom zweiten Betriebszustand, in dem das Sicherungselement 74 an der Kontaktfläche 78 anliegt in den ersten Betriebszustand, in dem das Sicherungselement 74 der Freigabenut 76 gegenüberliegt, verstellt. Eine Verstellung von dem ersten in den zweiten Betriebszustand erfolgt durch Verdrehen des Kupplungsringes in Gegenrichtung.

Zusätzlich kann in der Kontaktfläche eine aus der Kontaktfläche 78 hervortretende Wölbung 72 vorhanden sein, durch die eine unbeabsichtigte Verstellung des Betriebszustandes verhindert werden kann. Es muss dann eine gewisse Drehkraft aufgebracht werden, damit das Sicherungselement 74 reibend über die Wölbung 72 hinweggleitet, wodurch der Betriebszustand verstellt wird. Wenn eine derartige Wölbung 72 vorhanden ist, liegt das Sicherungselement 74 im zweiten Betriebszustand auf der Seite der Wölbung an der Kontaktfläche an, auf der die Freigabenut 76 nicht liegt.

Die Wölbung 72 kann durch das vordere, ggf. abgerundete Ende einer in eine durch den Kupplungsflansch 35' hindurchführenden Durchgangsbohrung 72' eingeschraubten Madenschraube 70 gebildet sein (siehe Figur 7).

Eine erfindungsgemäße Anordnung ist nicht auf die beschriebenen Ausführungsformen beschränkt. Vielmehr ist es für den Fachmann offensichtlich, dass anders geformte, bspw. nicht rotationssymmetrische Geometrien des Stempels ebenso denkbar sind. So kann beispielsweise der Stempel auch zumindest teilweise eckig oder oval sein, bzw. eckigen oder ovalen Querschnitt und/oder an einer oder mehreren Seiten eine ebene Fläche aufweisen. Ferner sind andere Verbindungsanordnungen als die Schnellwechselkupplung der beschriebenen Ausführungsform denkbar, wie etwa Einklemm- oder Einrastanordnungen, sofern damit durch eine parallel zur Vorstreckachse gerichtete Aufsetzbewegung des Stempelaufsatzes eine dem Lösen des Stempelaufsatzes von der Vorstreckerstange in einer der Richtung der Aufsetzbewegung entgegengesetzten Abziehrichtung entgegenwirkende form- und/oder kraftschlüssige Verbindung zwischen Stempelaufsatz und Vorstreckerstange herstellbar ist.

## Patentansprüche

1. Vorstreckerstempelanordnung (10) für ein Thermoformwerkzeug mit einer entlang einer Vorstreckachse (A) verlaufenden Vorstreckerstange (20) und einem Stempelaufsatz (30) mit einem Stempel (32) zum mechanischen Vorformen einer erwärmten Kunststofffolie und einem zur Verbindung des Stempelaufsatzes (30) mit der Vorstreckerstange (20) ausgelegten Verbindungsabschnitt (40), wobei durch eine parallel zur Vorstreckachse (A) gerichtete Aufsetzbewegung (i) des Stempelaufsatzes (30) eine dem Lösen des Stempelaufsatzes (30) von der Vorstreckerstange (20) in einer der Richtung der Aufsetzbewegung entgegengesetzten Abziehrichtung entgegenwirkende form- und/oder kraftschlüssige Verbindung zwischen Stempelaufsatz (30) und
Vorstreckerstange (20) herstellbar ist, **dadurch gekennzeichnet, dass** die Verbindung eine in der Abziehrichtung wirkende Arretierung des Stempelaufsatzes (30) an der Vorstreckerstange (20) umfasst,
und wobei Vorstreckerstange (20) oder Stempelaufsatz (30) eine Eingriffskerbe (22) aufweisen, und das Element von Vorstreckerstange (20) und Stempelaufsatz (30), das die Eingriffskerbe (22) nicht aufweist, ein Sperrelement (42) aufweist, wobei ein Lösen des mit der Vorstreckerstange (20) verbundenen Stempelaufsatzes (30) in der Abziehrichtung durch Eingriff des Sperrelementes (42) in die Eingriffskerbe (22) verhindert ist, wobei außerdem das Sperrelement (42) derart radial ausweichbar gelagert ist, dass es im Verlauf der bei der Aufsetzbewegung auf das Sperrelement (42) einwirkenden Krafteinwirkung entgegen einer zumindest mittelbaren Krafteinwirkung eines Vorspannelementes (44) radial nach außen ausweicht, bei Krafteinwirkung in entgegengesetzter Richtung vorzugsweise aufgrund der Anlage an einer Anlagefläche (46) radial unbewegt bleibt, und wobei des weiteren der Stempelaufsatz (30) ein Betätigungselement (34) aufweist, bei dessen Betätigung ein Abnahmevorgang des mit der Vorstreckerstange (20) verbundenen Stempelaufsatzes (30) von der
Vorstreckerstange (20) freigegeben wird, wobei das Betätigungselement (34) eine auf den Sperrelementen (42) zumindest mittelbar aufliegende Auflagefläche (36) aufweist, über die bei Betätigung des Betätigungselementes (34) eine Kraft auf Sperrelemente (42) und Vorspannelement (44) übertragen wird, wobei die Sperrelemente (42) infolge der Krafteinwirkung entgegen der Wirkung des Vorspannelementes (44) radial nach außen gedrängt werden.

2. Vorstreckerstempelanordnung nach Anspruch 1, **dadurch gekennzeichnet, dass** die Vorstreckerstange (20) an ihrem dem Stempelaufsatz (30) zugewandten Ende einen etwa zylinderförmigen Kupplungszapfen (24) aufweist und der Verbindungsabschnitt (40) einen Kupplungsflansch (48) mit einem im Wesentlichen komplementär zu dem Kupplungszapfen (24) ausgebildeten Verriegelungsraum (43) und radial ausweichbar gelagerten, in den Verriegelungsraum (43) zumindest teilweise eingreifenden Sperrelementen (42) aufweist, welche nach Verbinden des Stempelaufsatzes (30) mit der Vorstreckerstange (20) in mindestens eine in dem Kupplungszapfen (24) gebildete Eingriffskerbe (22), insbesondere eine den Kupplungszapfen (24) etwa ringförmig umlaufende Eingriffsnut (22), eingreifen.

3. Vorstreckerstempelanordnung nach Anspruch 2, **dadurch gekennzeichnet, dass** die Sperrelemente (42) durch mindestens ein Vorspannelement (44), insbesondere durch eine Feder (44), zumindest teilweise radial in den Verriegelungsraum (43) gedrängt werden.

4. Vorstreckerstempelanordnung nach Anspruch 2 oder 3, **dadurch gekennzeichnet, dass** die Sperrelemente (42) mindestens zwei quer, insbesondere etwa senkrecht zu der Vorstreckachse (A) verlaufende Sperrstifte (42) sind, die durch eine parallel zu der Vorstreckachse wirkende Feder (44), die an ihrem einen, dem Stempel (32) zugewandten Ende durch einen Ringabsatz (45) des Kupplungsflansches (48) abgestützt ist und über ihr anderes Ende ggf. mittelbar über ein Kraftübertragungselement (47) auf die Sperrstifte (42) einwirkt, in jeweils eine unter einem Winkel im Bereich von 30°bis 60°, insbesondere etwa 45°, zu der Vorstreckachse radial nach innen verlaufende und eine innere Anlagefläche (46) aufweisende Führungsnut gedrängt werden.

5. Vorstreckerstempelanordnung nach Anspruch 1, **dadurch gekennzeichnet, dass** der Abnahmevorgang in einer in Abziehrichtung gerichteten Abnahmebewegung des Stempelaufsatzes (30) besteht.

6. Vorstreckerstempelanordnung nach Anspruch 1 oder 5, **dadurch gekennzeichnet, dass** das Betätigungselement (34) einen die Vorstreckerstange (20) nach Verbindung mit dem Stempelaufsatz (30) ringförmig umlaufenden Kupplungsring (35) aufweist, und die Betätigung des Betätigungselementes (34) durch Krafteinwirkung auf den Kupplungsring (35) vorzugsweise in Abziehrichtung erfolgt.

7. Vorstreckerstempelanordnung nach Anspruch 6, **dadurch gekennzeichnet, dass** der Stempelaufsatz (30) mindestens zwei Betriebszustände einnehmen kann und durch Verdrehen des Kupplungsrings (35) um die Vorstreckachse (A) von dem ersten in den zweiten und durch Verdrehen des Kupplungsrings (35) in Gegenrichtung von dem zweiten in den ersten Betriebszustand verstellbar ist, wobei das Betätigungselement (34) im ersten Betriebszustand betätigbar ist, im zweiten nicht.

8. Vorstreckerstempelanordnung nach Anspruch 6, **dadurch gekennzeichnet, dass** das Verhältnis zwischen Durchmesser des Kupplungsrings (35) und Durchmesser des Stempels (32) in dessen der Vorstreckerstange (20) zugewandtem Abschnitt 0,5 oder größer, bevorzugt 0,7 oder größer, besonders bevorzugt 0,9 oder größer ist.

9. Vorstreckerstempelanordnung (10) nach einem der vorangehenden Ansprüche, wobei der Stempelaufsatz (30) vorzugsweise in dessen Verbindungsabschnitt (40) durch Verlängerungselemente (50) parallel zu der Vorstreckachse (A) verlängerbar ist, **dadurch**
**gekennzeichnet, dass** die Verlängerungselemente (50) derart an dem Stempelaufsatz (30) befestigbar sind, dass ein mindestens ein Verlängerungselement (50) aufweisender Stempelaufsatz (30) einteilig mit der Vorstreckerstange (20) verbindbar ist.

10. Vorstreckerstempelanordnung nach Anspruch 9, **dadurch gekennzeichnet, dass** der Verbindungsbereich (40) des Stempelaufsatzes (30) einen mit dem Stempel (32) verbindbaren, insbesondere in ein Innengewinde (31) des Stempels einschraubbaren Kupplungsflansch (48) aufweist, wobei die Verlängerungselemente (50) bei der Verbindung von Kupplungsflansch (48) und Stempel (32) zwischen Kupplungsflansch (48) und Stempel (32) einfügbar, bevorzugt einklemmbar sind.

11. Vorstreckerstempelanordnung nach Anspruch 10, **dadurch gekennzeichnet, dass** die Verlängerungselemente (50) ringförmige Ausgleichsscheiben (52) aufweisen, deren kreisförmige zentrale Ausnehmung zum Aufstecken auf einen gewindebolzenförmigen Fortsatz (49) des Kupplungsflansches (48) beim Verbinden von Stempel (32) und Kupplungsflansch (48) ausgelegt ist, wobei vorzugsweise das Verhältnis zwischen Durchmesser der Ausgleichsscheiben (52) und Durchmesser des Stempels (32) in dessen der Vorstreckerstange (20) zugewandtem Abschnitt bevorzugt 0,5 oder größer, bevorzugt 0,7 oder größer, besonders bevorzugt 0,9 oder größer ist.

12. Vorstreckerstempelanordnung nach den Ansprüchen 1 und 9, **dadurch gekennzeichnet, dass** die Durchmesser von Stempel (32), Verlängerungselementen (50) und Betätigungselement (34) etwa gleich groß sind.

13. Vorstreckerstempelanordnung nach einem der vorangehenden Ansprüche, **dadurch gekennzeichnet, dass** Vorstreckerstange (20) oder Stempelaufsatz (30) eine Führungskerbe, und das Element von Vorstreckerstange (20) und Stempelaufsatz (30), das die Führungskerbe nicht aufweist, ein Eingriffselement zum Eingriff in die Führungskerbe aufweist, wobei durch Eingriff des Eingriffselementes in die Führungskerbe ein Verdrehen des Stempelaufsatzes (30) um die Vorstreckachse nach Herstellen der Verbindung verhindert wird.

14. Thermoformwerkzeug zum Herstellen behälterförmiger Formteile aus einer erwärmten Kunststofffolie mit einem unteren Formwerkzeug mit einer Kavität und mit einem oberen Formwerkzeug mit einer Vorstreckerstempelanordnung (10) nach einem der Ansprüche 1 bis 13 zum Eindrücken der Folie in die Kavität, wobei der Stempel (32) der Vorstreckererstempelanordnung (10) zumindest teilweise in die Kavität hinein uns aus der Kavität heraus bewegbar ist.

## Claims

1. A pre-stretch die assembly (10) for a thermoforming tool comprising a pre-stretch rod (20) running along a pre-stretch axis (A) and a die attachment (30) with a die (32) for mechanically pre-moulding a heated plastic film and a connection section (40) designed to connect the die attachment (30) to the pre-stretch rod (20), a form-fit and/or force/fit connection between the die attachment (30) and the pre-stretch rod (20) countering detachment of the die attachment (30) from the pre-stretch rod (20) in a direction of pulling off opposite the direction of the positioning movement being able to be established by means of a positioning movement (i) of the die attachment (30) directed parallel to the pre-stretch axis (A), **characterised in that** the connection comprises locking of the die attachment (30) to the pre-stretch rod (20) acting in the direction of pulling off, and the pre-stretch rod (20) or die attachment (30) having an engagement groove (22), and the element comprising the pre-stretch rod (20) and the die attachment (30), that does not have the engagement groove (22), having a blocking element (42), detachment of the die attachment (30) connected to the pre-stretch rod (20) being prevented in the direction of pulling off by the blocking element (42) engaging in the engagement groove (22), the blocking element (42), moreover, being mounted such as to be able to deviate radially such that it deviates radially outwards countering an at least indirect application of force by a pre-stressing element (44) during the application of force acting on the blocking element (42) during the positioning movement and remaining unmoved radially when force is applied in the opposite direction preferably due to the contact with a contact surface (46), and, furthermore, the die attachment (30) having an actuation element (34), when the latter is actuated a process of removing the die attachment (30) connected to the pre-stretch rod (20) from the pre-stretch rod (20) being enabled, the actuation element (34) having a supporting surface (46) lying at least indirectly over the blocking elements (42) by means of which, when the actuation element (34) is actuated, a force is transferred to blocking elements (42) and a pre-stressing element (44), the blocking elements (42) being pushed radially outwards due to the application of force against the effect of the pre-stressing element (44).

2. The pre-stretch die assembly according to Claim 1, **characterised in that** the pre-stretch rod (20) has an approximately cylindrical coupling pin (42) on its end facing the die attachment (30), and the connection section (40) has a coupling flange (48) with a locking space (43) formed substantially complementarily to the coupling pin (24) and blocking elements (42) at least partially engaging at least partially in the locking space (43) and mounted such as to be able to deviate radially, and which after connecting the die attachment (30) to the pre-stretch rod (20) engage in at least one engagement groove (22) formed in the coupling pin (42), in particular an engagement groove (22) running round the coupling pin (24) approximately in a ring shape.

3. The pre-stretch die assembly according to Claim 2, **characterised in that** the blocking elements (42) are pushed by at least one pre-stressing element (44), in particular by a spring (44), at least partially radially into the locking space (43).

4. The pre-stretch die assembly according to Claim 2 or 3, **characterised in that** the blocking elements (42) are at least two blocking pins (42) running transversely, in particular approximately perpendicularly, to the pre-stretch axis (A), which is supported by a spring (44) acting parallel to the pre-stretch axis and which, on its one end facing the die (32), is supported by an annular shoulder (45) of the coupling flange (48) and acts via its other end or optionally indirectly via a force transfer element (47) on the blocking pins (42) and is pushed respectively into a guide groove having an inner contact surface (46) running radially inwards at an angle in the range of 30° to 60°, in particular approximately 45°, to the pre-stretch axis.

5. The pre-stretch die assembly according to Claim 1, **characterised in that** the removal process consists of a removal movement of the die attachment (30) directed in the direction of pulling off.

6. The pre-stretch die assembly according to Claim 1 to 5, **characterised in that** the actuation element (34) has a coupling ring (35) running annularly round the pre-stretch rod (20) after connection to the die attachment (30), and the actuation of the actuation element (34) takes place by applying force to the coupling ring (35), preferably in the direction of pulling off.

7. The pre-stretch die assembly according to Claim 6, **characterised in that** the die attachment (30) can adopt at least two operating states and can be adjusted by turning the coupling ring (35) around the pre-stretch axis (A) from the first into the second operating state and by turning the coupling ring (35) in the opposite direction from the second into the first operating state, the actuation element (34) being able to be actuated in the first operating state, and not in the second.

8. The pre-stretch die assembly according to Claim 6, **characterised in that** the ratio between the diameter of the coupling ring (35) and the diameter of the die (32) in its section facing the pre-stretch rod (20) is 0.5 or greater, preferably 0.7 or greater, particularly preferably 0.9 or greater.

9. The pre-stretch die assembly (10) according to any of the preceding claims, the die attachment (3) preferably being able to be lengthened parallel to the pre-stretch axis (A) in its connection section (40) by lengthening elements (50), **characterised in that** the lengthening elements (50) can be fastened to the die attachment (30) such that a die attachment (30) having at least one lengthening element (50) can be connected integrally to the pre-stretch rod (20).

10. The pre-stretch die assembly according to Claim 9, **characterised in that** the connection region (40) of the die attachment (30) has a coupling flange (48) that can be connected to the die (32), in particular that can be screwed into an internal thread (31) of the die, the lengthening elements (50) being able to be added, preferably being able to be clamped, between the coupling flange (48) and the die (32) when connecting the coupling flange (48) and the die (32).

11. The pre-stretch die assembly according to Claim 10, **characterised in that** the lengthening elements (50) have annular compensating discs (52) the circular central recess of which is designed for placing over an extension (49) of the coupling flange (48) in the form of a threaded bolt when connecting the die (32) and the coupling flange (48), the ratio between the diameter of the compensating discs (52) and the diameter of the die (32) in its section facing the pre-stretch rod (20) preferably being 0.5 or greater, preferably 0.7 or greater, particularly preferably 0.9 or greater.

12. The pre-stretch die assembly according to Claims 1 and 9, **characterised in that** the diameters of the die (32), the lengthening elements (50) and the actuation element (34) are of approximately the same size.

13. The pre-stretch die assembly according to any of the preceding claims, **characterised in that** the pre-stretch rod (20) or the die attachment (30) has a guide groove, and the element comprising the pre-stretch rod (20) and the die attachment (30) which does not have the guide groove has an engagement element for engaging in the guide groove, turning of the die attachment (30) around the pre-stretch axis after establishing the connection being prevented by the engaging element engaging in the guide groove.

14. A thermoforming tool for producing moulded parts in the form of containers from a heated plastic film with a lower moulding tool that has a cavity and with an upper moulding tool having a pre-stretch die assembly (10) according to any of Claims 1 to 13 for pushing the film into the cavity, the die (32) of the pre-stretch die assembly (10) being able to be moved at least partially into the cavity and out of the cavity.

## Revendications

1. Dispositif de poinçon de pré-étireuse (10) destiné à un outil de thermoformage comportant une tige de pré-étireuse (20) qui se prolonge le long d'un axe de pré-étirage (A) et un agencement à poinçon (30) qui comporte un poinçon (32) destiné au préformage mécanique d'une feuille de matière plastique chauffée et une section de raccord (40) conçue pour raccorder l'agencement de poinçon (30) à la tige de pré-étireuse (20),
dans lequel, grâce à un mouvement d'agencement (i) de l'agencement de poinçon (30) parallèle à l'axe de pré-étirage (A), il est possible de créer un raccord par complémentarité de forme et/ou de force entre l'agencement à poinçon (30) et la tige de pré-étireuse (20) qui s'oppose à la désolidarisation de l'agencement de poinçon (30) par rapport à la tige de pré-étireuse (20) dans un sens d'extraction contraire à une direction du mouvement d'agencement,
**caractérisé en ce que** le raccord comporte un dispositif de blocage de l'agencement de poinçon (30) sur la tige de pré-étireuse (20) qui agit dans le sens d'extraction, et
dans lequel la tige de pré-étireuse (20) ou l'agencement à poinçon (30) présente une rainure d'enclenchement (22) et l'élément parmi la tige de pré-étireuse (20) et l'agencement à poinçon (30) qui ne présente pas la rainure d'enclenchement (22) présente un élément de verrouillage (42),
dans lequel un dégagement de l'agencement à poinçon (30) relié à la tige de pré-étireuse (20), dans le sens d'extraction, est empêché sous l'effet de l'enclenchement de l'élément de verrouillage (42) dans la rainure d'enclenchement (22),
dans lequel, en outre, l'élément de verrouillage (42) peut s'escamoter radialement de manière qu'il s'escamote radialement vers l'extérieur lors de l'action de force qui s'exerce sur l'élément de verrouillage (42) lors de l'opération d'agencement en allant à l'encontre d'une action de force au moins indirecte d'un élément de sollicitation (44), et de manière qu'il reste radialement immobile lors d'une action de force exercée dans le sens contraire, de préférence en raison d'une action de butée sur une surface de butée (46),
dans lequel, en outre, l'agencement à poinçon (30) présente un élément d'actionnement (34) dont l'actionnement permet le processus de démontage entre l'agencement à poinçon (30) lié à la tige de pré-étireuse (20) et ladite tige de pré-étireuse (20), et
dans lequel l'élément d'actionnement (34) présente une surface de contact (36) qui vient en contact avec les éléments de verrouillage (42) de manière au moins indirecte et qui permet, lors de l'actionnement de l'élément d'actionnement (34), la transmission d'une force sur les éléments de verrouillage (42) et l'élément de sollicitation (44), les éléments de verrouillage (42) étant forcés radialement vers l'extérieur sous l'effet de l'action de force contraire à l'action de l'élément de sollicitation (44).

2. Dispositif de poinçon de pré-étireuse selon la revendication 1, **caractérisé en ce que** la tige de pré-étireuse (20) présente un tourillon de couplage (24) sensiblement cylindrique sur son extrémité tournée vers l'agencement à poinçon (30) et **en ce que** la section de raccord (40) présente une bride de couplage (48) comportant un espace de verrouillage (43) essentiellement complémentaire au tourillon de couplage (24) ainsi que des éléments de verrouillage (42) qui sont disposés de manière à pouvoir s'escamoter radialement et qui s'enclenchent au moins partiellement dans l'espace de verrouillage (43), lesquels éléments de verrouillage, après raccordement de l'agencement de poinçon (30) avec la tige de pré-étireuse (20), s'enclenchent dans au moins une rainure d'enclenchement constituée dans le tourillon de couplage (24), notamment une rainure d'enclenchement (22) annulaire présente sur toute la circonférence du tourillon de couplage (24).

3. Dispositif de poinçon de pré-étireuse selon la revendication 2, **caractérisé en ce que** les éléments de verrouillage (42) sont forcés radialement, au moins partiellement, dans l'espace de verrouillage (43) sous l'effet d'au moins un élément de sollicitation (44), notamment d'un ressort (44).

4. Dispositif de poinçon de pré-étireuse selon la revendication 2 ou 3, **caractérisé en ce que** les éléments de verrouillage (42) consistent en au moins deux broches de verrouillage (42) qui se prolongent transversalement, notamment sensiblement perpendiculairement à l'axe de pré-étirage (A), lesquelles broches, sous l'action d'un ressort (44) qui agit parallèlement à l'axe de pré-étirage et dont l'extrémité tournée vers le poinçon (32) est en appui contre un épaulement annulaire (45) de la bride de couplage (48) et l'autre extrémité agit sur les broches de verrouillage (42) éventuellement par l'intermédiaire d'un élément de transmission de force (47), sont forcées, avec un angle allant de 30° à 60°, notamment d'environ 45°, dans une gorge de guidage respective qui se prolonge radialement vers l'intérieur par rapport à l'axe de pré-étirage et qui présente une surface de butée intérieure (46).

5. Dispositif de poinçon de pré-étireuse selon la revendication 1, **caractérisé en ce que** le processus de démontage consiste dans un mouvement de démontage de l'agencement de poinçon (30) exercé dans le sens d'extraction.

6. Dispositif de poinçon de pré-étireuse selon la revendication 1 ou 5, **caractérisé en ce que** l'élément d'actionnement (34) présente une bague de couplage (35) qui entoure circonférentiellement la tige de pré-étireuse (20) après son raccordement avec l'agencement à poinçon (30), et **en ce que** l'actionnement de l'élément d'actionnement (34) s'effectue par action de force sur la bague de couplage (35), de préférence dans le sens d'extraction.

7. Dispositif de poinçon de pré-étireuse selon la revendication 6, **caractérisé en ce que** l'agencement à poinçon (30) peut adopter au moins deux états opérationnels et **en ce que** la rotation de la bague de couplage (35) autour de l'axe de pré-étirage (A) lui permet de passer du premier au deuxième état opérationnel et la rotation de la bague de couplage (35) dans le sens contraire lui permet de passer du deuxième état opérationnel au premier état opérationnel, l'élément d'actionnement (34) étant actionnable lorsqu'il se trouve dans le premier état opérationnel, mais n'étant pas actionnable dans le deuxième état opérationnel.

8. Dispositif de poinçon de pré-étireuse selon la revendication 6, **caractérisé en ce que** la relation entre le diamètre de la bague de couplage (35) et celui du poinçon (32) dans sa section tournée vers la tige de pré-étireuse (20) est de 0,5 ou plus, de préférence de 0,7 ou plus, tout particulièrement de 0,9 ou plus.

9. Dispositif de poinçon de pré-étireuse (10) selon l'une des revendications précédentes, dans lequel l'agencement à poinçon (30) peut être rallongé parallèlement à l'axe de pré-étirage (A), de préférence dans sa section de raccord (40), par le biais d'éléments de rallonge (50), **caractérisé en ce que** les éléments de rallonge (50) peuvent être fixés sur l'agencement à poinçon (30) de manière qu'un agencement à poinçon (30) présentant au moins un élément de rallonge (50) puisse être raccordé à la tige de pré-étireuse (20) sous la forme d'un élément unitaire.

10. Dispositif de poinçon de pré-étireuse selon la revendication 9, **caractérisé en ce que** la zone de raccordement (40) de l'agencement de poinçon (30) présente une bride de couplage (48) susceptible d'être raccordée au poinçon (32), notamment vissée dans un taraudage (31) pratiqué dans le poinçon, les éléments de rallonge (50) pouvant être insérés, de préférence coincés, entre la bride de couplage (48) et le poinçon (32) lors dudit raccordement de la bride de couplage (48) au poinçon (32).

11. Dispositif de poinçon de pré-étireuse selon la revendication 10, **caractérisé en ce que** les éléments de rallonge (50) présentent des cales annulaires (52) dont l'évidement circulaire central est conçu pour être placé sur un prolongement en forme de tige filetée (49) de la bride de couplage (48) lors du raccordement du poinçon (32) à la bride de couplage (48), dans lequel, de préférence, le rapport entre le diamètre des cales (52) et le diamètre du poinçon (32) dans sa section tournée vers la tige de pré-étireuse (20) est de 0,5 ou plus, de préférence de 0,7 ou plus, plus particulièrement de 0,9 ou plus.

12. Dispositif de poinçon de pré-étireuse selon les revendications 1 et 9, **caractérisé en ce que** le diamètre du poinçon (32), celui des éléments de rallonge (50) et celui de l'élément d'actionnement (34) sont de grandeur approximativement semblable.

13. Dispositif de poinçon de pré-étireuse selon l'une des revendications précédentes, **caractérisé en ce que** la tige de pré-étireuse (20) ou l'agencement à poinçon (30) présente une rainure de guidage, et l'élément parmi la tige de pré-étireuse (20) et l'agencement à poinçon (30) qui ne présente pas ladite rainure de guidage présente un élément d'enclenchement destiné à s'enclencher dans la rainure de guidage, dans lequel l'enclenchement de l'élément d'enclenchement dans la rainure de guidage empêche une torsion de l'agencement de poinçon (30) autour de l'axe de pré-étirage après la création du raccordement.

14. Outil de thermoformage destiné à produire des pièces façonnées en forme de récipients à partir d'une feuille de matière plastique chauffée au moyen d'un outil de formage inférieur présentant une cavité et d'un outil de formage supérieur présentant un dispositif de poinçon de pré-étireuse (10) selon l'une des revendications 1 à 13 pour emboutir la feuille dans la cavité, le poinçon (32) du dispositif de poinçon de pré-étireuse (10) pouvant, au moins en partie, être introduit dans la cavité et extrait de celle-ci.
